# EUROPÄISCHE PATENTSCHRIFT

(11) **EP 1 077 826 B1**
(45) Veröffentlichungstag und Bekanntmachung des Hinweises auf die Patenterteilung: **02.11.2006**
(21) Anmeldenummer: 99950334.5
(22) Anmeldetag: 10.05.1999
(51) Int. Cl.: B60K 31/00

(54) **FAHRER-ASSISTENZSYSTEM UND VERFAHREN ZU DESSEN BETRIEB**
DRIVER ASSISTANCE SYSTEM AND A METHOD FOR THE OPERATION THEREOF
SYSTEME D'ASSISTANCE AU CONDUCTEUR ET SON PROCEDE DE FONCTIONNEMENT

(30) Priorität: 12.05.1998 DE 19821163
(43) Veröffentlichungstag der Anmeldung: 28.02.2001
(73) Patentinhaber: Volkswagen Aktiengesellschaft, 38436 Wolfsburg (DE)
(72) Erfinder: BERGHOLZ, Ralf, D-38108 Braunschweig (DE)
(74) Vertreter: Zucker, Volker
(86) Internationale Anmeldenummer: PCT/EP1999/003203
(87) Internationale Veröffentlichungsnummer: WO 1999/058358

(56) Entgegenhaltungen:
- US-A- 5 529 138
- US-A- 5 529 139
- PATENT ABSTRACTS OF JAPAN & JP 1994 255391 A (NIPPONDENSO CO. LTD.), 13. September 1994 (1994-09-13)

## Beschreibung

Die Erfindung betrifft ein Verfahren zum Betreiben eines Fahrer-Assistenzsystems eines Kraftfahrzeuges, gemäß dem Oberbegriff des Anspruchs 1. Die Erfindung betrifft ferner ein Fahrer-Assistenzsystem eines Kraftfahrzeuges, gemäß dem Oberbegriff des Anspruchs 6.

Fahrer-Assistenzsysteme eines Kraftfahrzeuges unterstützen einen Fahrer des Kraftfahrzeuges bei der Bedienung und beim Führen desselben. So ist beispielsweise aus der DE 3414891 C1 eine Vorrichtung zur spurhaltungsgeregelten Lenkung eines Fahrzeuges bekannt, wobei eine Einrichtung zur Erkennung der Fahrzeuglage relativ zu einer Fahrbahn, eine Lenkeinrichtung, die aus der von der Fahrzeuglageerkennungseinrichtung ermittelten Ist-Fahrzeuglage und einer vorgegebenen Soll-Fahrzeuglage ein Regelabweichungssignal ermittelt und ein zugehöriges Lenkhilfe-Stellsignal abgibt, sowie eine mit dem Lenkhilfe-Stellsignal beaufschlagbare Lenkwinkeleinstellung vorgesehen ist. Hierbei ist die regelungsangeforderte Lenkwinkelverstellung zusätzlich mit einer fahrerangeforderten Lenkwinkelstellsignalkomponente überlagerbar.

Die DE 0 464 821 A1 beschreibt ein Verfahren und eine Vorrichtung zur Kollisionsverhinderung zwischen einem Kraftfahrzeug und einem Objekt. Eine mittels Radar erzeugte Abbildung der Umgebung vor dem Kraftfahrzeug wird zusammen mit einer Rekonstruktion der Straßengeometrie dazu verwendet, Ecken zu identifizieren und eine Position und eine Geschwindigkeit des Fahrzeugs bezüglich der Straße zu erfassen. Ein vermutlicher zukünftiger Fahrweg wird auf der Grundlage eines momentan durchgeführten Fahrzeugmanövers und der Straßengeometrie bestimmt. Auf dem vermutlichen Fahrweg liegende Objekte werden in der mittels Radar erzeugten Abbildung der Umgebung bestimmt und diese Abbildung der Umgebung wird unter Weglassung von Objekten, welche abseits der Straße liegen, dargestellt, wobei solche Objekte, die auf dem vermutlichen Fahrweg des Kraftfahrzeugs liegen hervorgehoben dargestellt werden.

Aus der DE 195 01 950 A1 ist ein Verfahren zum vollautomatischen Führen von Fahrzeugen in einem Verkehrsraum bekannt. Dieses umfaßt ein Sensorsystem zum Erfassen aller ruhenden und bewegten Objekte innerhalb des entsprechenden Verkehrsraumes, ein Sensorsystem zum Erfassen eines Verkehrswegzustandes sowie ein zentrales Leitsystem zum Erzeugen von Leitkommandos für die Fahrzeuge auf der Basis von Fahrziel- und Prioritätswünschen der Verkehrsteilnehmer, der lokalen Verkehrsraum- Verkehrswege-Gegebenheiten und der großräumigen Verkehrslage, wie sie von den beiden Sensorsystemen erfaßt werden.

Die DE 43 365 979 A1 beschreibt ein Sicherheits-Management-System, welches verschiedene Sicherheitssysteme im Kraftfahrzeug, wie beispielsweise Airbag-Auslösegeräte, Abstandswamsysteme, einen Tempomat, ein Motor-Management-System für eine möglichst gleichmäßige Einhaltung einer vorgewählten Reisegeschwindigkeit, eine Anti-Schlupf-Regelung (ASR) und/oder ein Antiblockiersystem (ABS) miteinander netzartig verbindet. Dies soll in den Einzelsystemen vorhandene Informationen für alle Systeme nutzbar machen.

Aus der DE 38 44 340 A1 ist eine Einparkhilfe bekannt. Ein Sensorsystem erkennt und vermißt eine geometrische Lage einer Parklücke. Eine Steuereinheit berechnet optimale Manövrierparameter und eine Ausgabeeinheit gibt den optimalen Weg über optische und akustische Informationen an einen Fahrzeuglenker und/oder greift automatisch in die Führungssysteme des Kraftfahrzeuges ein.

Die DE 195 23 111 A1 beschreibt eine Einrichtung zum Regeln eines Abstandes eines Kraftfahrzeuges zu einem vorausfahrenden Fahrzeug. Hierbei ist ein Abstandsregler mit einem künstlichen, neuronalen Netzwerk ausgestattet, dem eingangsseitig Daten über momentane Abastandsregeldifferenzen zugeführt werden und das ausgangsseitig ein Stellsignal für einen Antriebsstrang und/oder eine Bremsanlage des Kraftfahrzeuges abgibt.

Aus der DE 42 00 694 A1 und dem Artikel "Intelligent Cruise Control with Fuzzy Logic" von Rolf Müller und Gerhard Nöcker, Daimler-Benz AG ist jeweils ein Verfahren zur Geschwindigkeits- und Abstandsregelung eines Fahrzeuges bekannt. Derartige Systeme werden auch als "Autonomous Intelligent Cruise Control" oder kurz AICC bezeichnet. Es wird ein aktueller Abstand sowie eine momentane Geschwindigkeit erfasst und daraus Sollwerte für Abstand und Geschwindigkeit ermittelt und eingestellt. Bei einem Eingriff des Fahrers in das Fahrgeschehen wird dabei die Regelung ggf. unterbrochen. Nach einem vorgebbaren Zeitraum wird die Abstandsregelung wieder selbsttätig reaktiviert. Eine ggf. integrierte Fuzzy-Logic führt zu fahrerähnlichen Reaktionen des Systems.

Alle diese Systeme müssen unter allen denkbaren Umgebungsbedingungen einwandfrei arbeiten. Dies macht diese Systeme teuer und aufwendig in der Entwicklung.

Alternativ ist aus der gattungsbildenden US 5 529 139 ein Geschwindigkeitssteuerungssystem bekannt, welches derart arbeitet, dass ein gesteuertes Fahrzeug einem voraus befindlichen Objekt mit gleicher Geschwindigkeit und konstantem Abstand folgt. Hierbei wird das Geschwindigkeitssteuerungssystem ausschließlich manuell vom Fahrer aktiviert oder deaktiviert und zeigt diesem lediglich seine Betriebsbereitschaft an. Zum Feststellen der Betriebsbereitschaft werden ausschließlich auf das gesteuerte Fahrzeug bezogene Parameter verwendet, nämlich Abstand und Relativgeschwindigkeit zu einem voraus befindlichen Objekt. Dabei wird verfahrensmäßig geprüft, ob ein vom Fahrer eingestellter Zwischenfahrzeugabstand innerhalb einer steuerbaren Zone des Zwischenfahrzeugabstandes liegt. Ist der eingestellte Zwischenfahrzeugabstand außerhalb des Bereiches, so wird der Fahrer aufgefordert, diesen zurückzusetzen bzw. zu vergrößern. Weiter wird geprüft, ob das eigene Fahrzeug das identifizierte vorausfahrende Fahrzeug im vorhergehenden Steuerzyklus verloren hat oder nicht. Wurde das vorausfahrende Fahrzeug verloren, so wird in einem weiteren Schritt die Zwischenfahrzeug-Konstantabstandssteuerung beendet und das Fahrzeug in einen Ausrollzustand gebracht.

Der vorliegenden Erfindung liegt daher die Aufgabe zugrunde, ein Verfahren und ein Fahrer-Assistenzsystem der oben genannten Art zur Verfügung zu stellen, wobei die oben genannten Nachteile überwunden werden und eine ausreichende Sicherheit für Fahrzeuginsassen und andere Verkehrsteilnehmer auch in solchen Situationen gegeben ist, in denen das jeweilige Fahrer-Assistenzsystem nicht den Fahrer unterstützend wirken kann.

Diese Aufgabe wird erfindungsgemäß durch ein Verfahren der o. g. Art mit den in Anspruch 1 angegebenen Verfahrensschritten und durch ein Fahrer-Assistenzsystem der o. g. Art mit den in Anspruch 6 gekennzeichneten Merkmalen gelöst. Vorteilhafte Ausgestaltungen der Erfindung sind in den abhängigen Ansprüchen angegeben.

Dazu sind bei einem Verfahren der o. g. Art erfindungsgemäß folgende Schritte vorgesehen:
(a) Erfassen von vorbestimmten, momentanen Umgebungsparametern einer augenblicklichen Verkehrssituation,
(b) Vergleichen der erfassten momentanen Umgebungsparameter mit gespeicherten, für das Fahrer-Assistenzsystem zulässigen Umgebungsparametern, und
(c) automatisches Deaktivieren des Fahrer-Assistenzsystems, wenn sich momentane Umgebungsparameter außerhalb für das Fahrer-Assistenzsystem vorbestimmten zulässigen Umgebungsparameter befinden oder automatisches Aktivieren des Fahrer-Assistenzsystems, wenn sich momentane Umgebungsparameter innerhalb der für das Fahrer-Assistenzsystem vorbestimmten zulässigen Umgebungsparameter befinden, wobei die momentanen Umgebungsparameter eine Verkehrswegeart sind, nämlich Autobahn, Landstraße oder Stadtstraße, wobei mittels eines GPS-Systems die momentane Position des Kraftfahrzeuges festgestellt wird und ein Prozessor anhand dieser Positionsdaten aus den Daten in einem Landkartenspeicher ermittelt, auf welcher Verkehrswegeart sich das Fahrzeug momentan befindet.

Ein wesentlicher Kern der Erfindung liegt darin, ein Fahrer-Assistenzsystem je nach momentaner Verkehrssituation jeweils dann temporär zu deaktivieren, wenn eine Situation vorliegt, welche das Fahrer-Assistenzsystem nicht beherrscht bzw. auf die es nicht abgestimmt wurde- Somit steht in besonders vorteilhafter Weise eine Einsatzbereichserkennung für fahrerunterstützende Systeme zur Verfügung, so dass entsprechende Fahrer-Assistenzsysteme mit eingeschränktem Einsatzbereich einsetzbar sind.

Dies hat den Vorteil, dass das Fahrer-Assistenzsystem nicht mehr in Bezug auf alle denkbaren Situationen entwickelt werden muss, sondern dessen Funktion auf vorbestimmte Umgebungsbedingungen beschränkt bleibt bzw. bei vorbestimmten Umgebungsbedingungen außer Funktion gesetzt wird. Es ist somit sichergestellt, dass das jeweilige System nur in Verkehrssituation arbeitet, für die es abgestimmt und geprüft wurde. Dies hält Entwicklungskosten niedrig und Entwicklungszeiten kurz.

In einer bevorzugten Ausführungsform werden als zusätzliche äußere Umgebungsparameter eine Verkehrsart, ein Kurvenradius eines momentan befahrenen Verkehrsweges, wie beispielsweise Autobahn, Landstraße und/oder Stadtstraße, eine momentan befahrene Fahrspur eines Verkehrsweges, eine Breite eines momentan befahrenen Verkehrsweges und/oder eine Verkehrsbeschränkung, wie beispielsweise eine Geschwindigkeitsbegrenzung, eine Straßensperre und/oder eine Einbahnstraße, berücksichtigt.

Eine entsprechende Information eines Fahrers des Kraftfahrzeuges mit entsprechendem Gewinn an Betriebssicherheit erzielt man durch folgenden zusätzlichen Schritt:
(d) Erzeugen eines über einen momentanen Betriebszustand des Fahrer-Assistenzsystems informierenden, vorbestimmten Signals.

Dadurch, dass der Fahrer über den momentanen Zustand des jeweiligen Fahrer-Assistenzsystems immer informiert ist, kann er rechtzeitig sein Bedienungsverhalten bzw. sein Fahrverhalten darauf einstellen. Er wird so nicht von einer ausbleibenden Unterstützung durch ein jeweiliges Fahrer-Assistenzsystem überrascht. Dies erhöht eine Betriebssicherheit des Fahrzeuges bei gleichzeitig niedrigen Entwicklungskosten und kurzen Entwicklungszeiten für Fahrzeug und Fahrer-Assistenzsystem.

Zweckmäßigerweise ist das vorbestimmte Signal ein akustisches Signal, wie beispielsweise ein Wamton und/oder eine Sprachansage, ein optisches Signal, wie beispielsweise eine Lampe und/oder Anzeige, und/oder ein von einem Fahrer spürbares Kraftrückmeldungssignal, beispielsweise an einem Lenkrad, einem Fahrpedal, einem Bremspedal, einem Kupplungspedal und/oder einem Schalthebel wirkende Kraft.

In einer bevorzugten Ausführungsform ist das Fahrer-Assistenzsystem ein autonomes, intelligentes Fahrzeugführungssystem (AICC), eine Vorrichtung zur spurhaltungsgeregelten Lenkung eines Kraftfahrzeuges, ein Sicherheits-Management-System zum Schutz von Fahrzeuginsassen, eine Einrichtung zum Regeln einer Geschwindigkeit eines Kraftfahrzeuges und/oder eines Abstandes des Kraftfahrzeuges zu einem vorausfahrenden Fahrzeug oder zu einem in Fahrtrichtung befindlichen Gegenstand, eine Vorrichtung zum Vermeiden und/oder Minimieren von Konfliktsituationen im Straßenverkehr und/oder eine Vorrichtung zur Leuchtweiteneinstellung von Scheinwerfern eines Kraftfahrzeuges.

Bei einem Fahrer-Assistenzsystem der o. g. Art ist erfindungsgemäß ein Erfassungsmittel für vorbestimmte, momentane Umgebungsparameter einer augenblicklichen Verkehrssituation, ein Vergleichsmittel zum Vergleichen der erfassten momentanen Umgebungsparameter mit gespeicherten, für das Fahrer-Assistenzsystem zulässigen Umgebungsparametern, sowie ein Aktivierungs-/Deaktivierungsmittel, zum Deaktivieren des Fahrer-Assistenzsystems, wenn sich vorbestimmte momentane Umgebungsparameter außerhalb der für das Fahrer-Assistenzsystem zulässigen Umgebungsparameter befinden oder Aktivieren des Fahrer-Assistenzsystems, wenn sich vorbestimmte momentane Umgebungsparameter innerhalb der für das Fahrer-Assistenzsystem zulässigen Umgebungsparameter befinden, vorgesehen.

Dies hat den Vorteil, dass das Fahrer-Assistenzsystem nicht mehr in Bezug auf alle denkbaren Situationen entwickelt werden muss sondern dessen Funktion auf vorbestimmte Umgebungsbedingungen beschränkt bleibt oder bei vorbestimmten Umgebungsbedingungen außer Funktion gesetzt wird. Es ist somit sichergestellt, dass das jeweilige System nur in Verkehrssituation arbeitet, für die es abgestimmt und geprüft wurde. Dies hält Entwicklungskosten niedrig und Entwicklungszeiten kurz.

Eine entsprechende Information eines Fahrers des Kraftfahrzeuges mit entsprechendem Gewinn an Betriebssicherheit erzielt man dadurch, dass ein Anzeigemittel vorgesehen ist, welches ein über einen momentanen Betriebszustand des Fahrer-Assistenzsystems informierendes, vorbestimmtes Signal erzeugt. Da der Fahrer über den momentanen Zustand des jeweiligen Fahrer-Assistenzsystems immer informiert ist, kann er rechtzeitig sein Bedienungsverhalten bzw. Fahrverhalten darauf einstellen. Er wird so nicht von einer ausbleibenden Unterstützung durch ein jeweiliges Fahrer-Assistenzsystem überrascht. Dies erhöht eine Betriebssicherheit des Fahrzeuges bei gleichzeitig niedrigen Entwicklungskosten und kurzen Entwicklungszeiten für Fahrzeug und Fahrer-Assistenzsystem.

In einer besonders bevorzugten Ausführungsform umfasst das Erfassungsmittel für vorbestimmte, momentane Umgebungsparameter einer augenblicklichen Verkehrssituation zusätzlich ein Verkehrsleitsystem, ein Radar, eine manuell vom Fahrer bedienbare Eingabevorrichtung und/oder ein Radsensor-System.

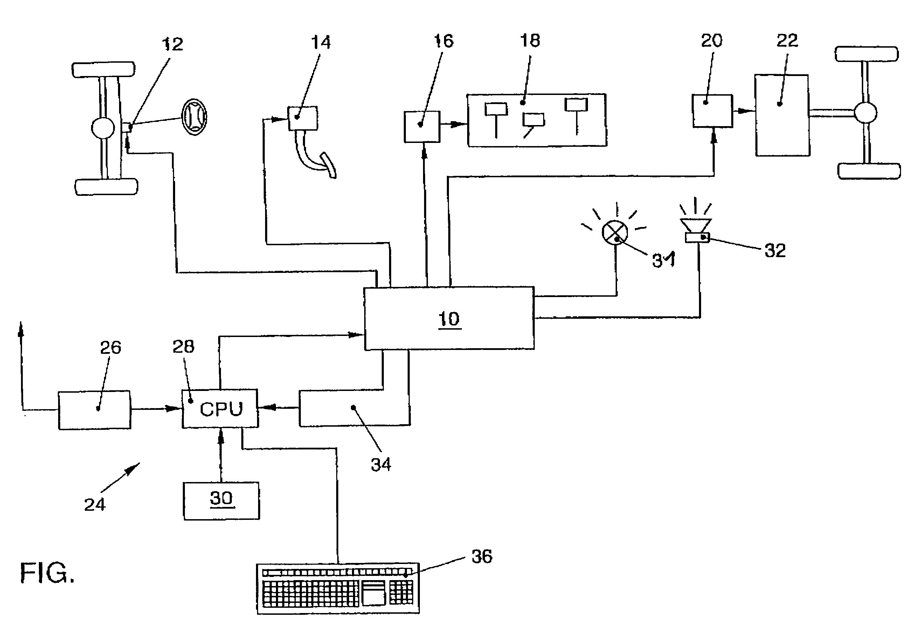

Weitere Merkmale, Vorteile und vorteilhafte Ausgestaltungen der Erfindung ergeben sich aus den abhängigen Ansprüchen sowie aus der nachstehenden Beschreibung der Erfindung anhand der beigefügten Zeichnung. Diese zeigt in der einzigen Fig. ein schematisches Blockschaltbild einer bevorzugten Ausführungsform eines erfindungsgemäßen Fahrer-Assistenzsystems.

Dieses umfasst eine Fahrer-Assistenzeinheit 10, wie beispielsweise ein autonomes, intelligentes Fahrzeugführungssystem (AICC), eine Vorrichtung zur spurhaltungsgeregelten Lenkung eines Kraftfahrzeuges, ein Sicherheits-Management-System zum Schutz von Fahrzeuginsassen, eine Einrichtung zum Regeln einer Geschwindigkeit eines Kraftfahrzeuges und/oder eines Abstandes des Kraftfahrzeuges zu einem vorausfahrenden Fahrzeug oder zu einem in Fahrtrichtung befindlichen Gegenstand, eine Vorrichtung zum Vermeiden und/oder Minimieren von Konfliktsituationen im Straßenverkehr Straßenverkehr und/oder eine Vorrichtung zur Leuchtweiteneinstellung von Scheinwerfern eines Kraftfahrzeuges. Diese Fahrer-Assistenzeinheit 10 wirkt, je nach Typ, beispielsweise auf eine Fahrzeuglenkung 12, ein Bremssystem 14, ein Steuergerät 16 eines Antriebsaggregats 18 und/oder auf ein Steuergerät 20 eines automatischen Getriebes 22.

Für das Fahrer-Assistenzsystem ist ein vorbestimmter zulässiger Einsatzbereich vorgesehen, welcher durch entsprechende Umgebungsparameter charakterisiert ist. Diese Umgebungsparameter sind eine Verkehrswegeart, nämlich Autobahn, Landstraße oder Stadtstraße sowie gegebenenfalls zusätzlich eine Verkehrswegeart, eine Durchschnittsgeschwindigkeit, ein Kurvenradius eines momentan befahrenen Verkehrsweges, eine momentan befahrene Fahrspur eines Verkehrsweges, eine Breite eines momentan befahrenen Verkehrsweges und/oder eine Verkehrsbeschränkung, wie beispielsweise eine Geschwindigkeitsbegrenzung, eine Straßensperre und/oder eine Einbahnstraße. Jeder für ein bestimmtes Fahrer-Assistenzsystem relevante Umgebungsparameter hat einen vorbestimmten Wert oder Wertebereich, welcher einen für das jeweilige Fahrer-Assistenzsystem zulässigen Einsatzbereich charakterisiert.

So ist beispielsweise für ein Fahrer-Assistenzsystem in Form einer Autonomen intelligenten Fahrzeugführung (Autonomous Intelligent Cruise Control - AICC) der zulässige Wert für den Verkehrsweg eine Autobahn und ein zulässiger Wert für eine Geschwindigkeit ein Geschwindigkeitsbereich bis zu einer vorbestimmten maximalen Geschwindigkeit. Die spezielle Ausgestaltung dieses Fahrer-Assistenzsystems erlaubt beispielsweise nur einen Betrieb in einem Einsatzbereich, in dem die vorgenannten Werte erfüllt sind.

Erfindungsgemäß weist deshalb das Fahrer-Assistenzsystem eine Erfassungsvorrichtung 24 für diese Umgebungsparameter auf. Diese Erfassungsvorrichtung umfaßt in der in der einzigen Fig. beispielhaft dargestellten Ausführungsform ein GPS-System 26 (satellitengestütztes Navigationssystem), einen zentralen Prozessor 28 und einen Landkartenspeicher 30. Mittels des GPS-Systems 26 wird zunächst eine momentane Position des Kraftfahrzeuges festgestellt. Anhand dieser Positionsdaten ermittelt der Prozessor aus den Daten in dem Landkartenspeicher 30 auf welcher Verkehrswegeart sich das Fahrzeug momentan befindet. Ist der momentane Verkehrsweg beispielsweise eine Landstraße, so führt ein Vergleich dieses momentanen Umgebungsparameters "Landstraße" mit den in einem Speicher 34 der Fahrer-Assistenzeinheit 10 gespeicherten zulässigen Umgebungsparametern, welcher "Autobahn" vorschreibt, zu einem negativen Ergebnis des Vergleichs. In dem vorgenannten Beispiel für eine Autonome intelligente Fahrzeugführung (Autonomous Intelligent Cruise Control - AICC) würde der Prozessor 28 als Deaktivierungs-/Aktivierungsmittel die Fahrer-Assistenzeinheit 10 deaktivieren, da sich die momentanen Umgebungsparameter außerhalb eines vorbestimmten zulässigen Bereiches befinden. Mit anderen Worten ist ein momentaner Einsatzbereich festgestellt worden, für den die AICC nicht ausgebildet ist. Daher wird die AICC abgeschaltet. In der lediglich beispielhaft dargestellten Ausführungsform ist somit das Vergleichsmittel, das Deaktivierungs-/Aktivierungsmittel sowie teilweise das Erfassungsmittel in einem einzigen Gerät, nämlich dem Prozessor 28, integriert.

Ein deaktiviertes, also den Fahrer nicht unterstützendes Fahrer-Assistenzsystem signalisiert in vorteilhafter Weise seinen deaktivierten Zustand dem Fahrer, so daß sich dieser auf die neue Situation einstellen kann. Dies erfolgt beispielsweise durch ein optisches Anzeigemittel 31 oder durch ein akustisches Anzeigemittel 32. Dem Fahrer ist dadurch bewußt, daß er nicht mit einer Unterstützung durch das entsprechende Fahrer-Assistenzsystem rechnen kann und muß seine Bedienungsweise bzw. Fahrweise darauf einstellen. Bei dem o. g. Beispiel der AICC kann also ein Fahrer nicht mehr darauf vertrauen, daß automatisch ein ausreichender Sicherheitsabstand zu einem vorausfahrenden Fahrzeug eingestellt wird, sondern vielmehr der Fahrer selbst ganz alleine für einen ausreichenden Sicherheitsabstand sorge tragen muß. Eine andere mögliche Signalisierung eines deaktivierten Zustands ergibt sich beispielsweise daraus, daß aufgrund der fehlenden Ansteuerung der Lenkung 12 durch beispielsweise eine Spurhaltevorrichtung eine entsprechende Kraftrückmeldung an den Fahrer Ober das Lenkrad oder beispielsweise durch einen Tempomat eine entsprechende Kraftrückmeldung an einem Fahrpedal oder durch ein Antiblockiersystem (ABS) eine entsprechende Kraftrückmelclung an einem Bremspedal nicht mehr vorhanden ist. Durch diese "haptische" Signalisierung wird daher dem Fahrer bewußt gemacht, daß er auf keine Unterstützung durch das jeweilige Fahrer-Assistenzsystem hoffen darf und sich entsprechend verhalten muß.

Als Erfassungsvorrichtung sind zusätzlich zu dem dargestellten GPS-System auch andere Vorrichtungen einsetzbar, wie beispielsweise Radsensoren für eine Geschwindigkeit, aus deren zeitlichen Verlauf ggf. auch ein Stau oder Stop-and-Go-Verkehr erkennbar ist.

Je nach Ausrüstung eines Kraftfahrzeuges kann ein Verlassen eines zulässigen Einsatzbereiches für ein jeweiliges Fahrer-Assistenzsystem mit einem Navigationssystem und dessen Daten bzgl. einer Fahrzeugposition auf einem Verkehrsweg, beispielsweise einem GPS-System, oder aus abgeleiteten Größen, wie beispielsweise Durchschnittsgeschwindigkeit, Stop-and-Go-Verkehr, Kurvenradien, Fahrspur, Fahrbahnbreite etc. ermittelt werden.

Zusätzlich ist ferner eine direkte Eingabe durch einen Fahrer des Kraftfahrzeuges vorgesehen. Hierzu ist beispielsweise eine entsprechende manuell bedienbare Eingabevorrichtung 36 angeordnet, welche eine manuelle Eingabe des Fahrer beispielsweise bzgl. einer Verkehrswegeart, welche momentan befahren wird, zuläßt, wie beispielsweise "Autobahn", "Landstraße" oder "Stadt". Dieser momentane Wert eines Umgebungsparameters wird dann beispielsweise vom Prozessor 28 mit den zulässigen, im Speicher 34 gespeicherten Werten verglichen, wodurch sich eine entsprechende Entscheidung für das Deaktivieren oder Aktivieren des Fahrer-Assistenzsystems ergibt.

Die Mitteilung bzw. Warnung an den Fahrer beispielsweise bzgl. eines Deaktivierten Fahrer-Assistenzsystems erfolgt beispielsweise "haptisch", indem eine entsprechende Unterstützungsfunktion beispielsweise am Lenkrad oder Fahrpedal nicht mehr spürbar ist. Alternativ oder zusätzlich erfolgt eine optische Anzeige, beispielsweise mittels der Lampe 31 oder eine Anzeigevorrichtung in Form eines Displays. Ferner alternativ oder zusätzlich erfolgt eine akustische Mitteilung bzw. Warnung in Form beispielsweise eines Signaltones oder eine Sprachansage.

### BEZUGSZEICHENLISTE

- 10: Fahrer-Assistenzeinheit
- 12: Fahrzeuglenkung
- 14: Bremssystem
- 16: Steuergerät
- 18: Antriebsaggregat
- 20: Steuergerät
- 22: automatischen Getriebe
- 24: Erfassungsvorrichtung
- 26: GPS-System
- 28: zentraler Prozessor
- 30: Landkartenspeicher
- 31: optisches Anzeigemittel
- 32: akustisches Anzeigemittel
- 34: Speicher
- 36: manuelle Eingabevorrichtung

## Patentansprüche

1. Verfahren zum Betreiben eines Fahrer-Assistenzsystems eines Kraftfahrzeuges, umfassend folgende Schritte,
(a) Erfassen von vorbestimmten, momentanen Umgebungsparametern einer augenblicklichen Verkehrssituation,
(b) Vergleichen der erfassten vorbestimmten momentanen Umgebungsparameter mit gespeicherten, für das Fahrer-Assistenzsystem zulässigen Umgebungsparametern, und
(c) automatisches Deaktivieren des Fahrer-Assistenzsystems, wenn sich die vorbestimmten momentane Umgebungsparameter außerhalb der für das Fahrer-Assistenzsystem vorbestimmten zulässigen Umgebungsparameter befinden oder automatisches Aktivieren des Fahrer-Assistenzsystems, wenn sich die vorbestimmten momentanen Umgebungsparameter innerhalb der für das Fahrer-Assistenzsystem zulässigen vorbestimmten Umgebungsparameter befinden,
**dadurch gekennzeichnet, dass**
die vorbestimmten momentanen Umgebungsparameter eine Verkehrswegeart sind, nämlich Autobahn, Landstraße oder Stadtstraße, wobei mittels eines GPS-Systems (26) die momentane Position des Kraftfahrzeuges festgestellt wird und ein Prozessor (28) anhand dieser Positionsdaten aus den Daten in einem Landkartenspeicher (30) ermittelt, auf welcher Verkehrswegeart sich das Fahrzeug momentan befindet.

2. Verfahren nach Anspruch 1, **dadurch gekennzeichnet, dass** als zusätzliche äußere Umgebungsparameter eine Verkehrsart, ein Kurvenradius eines momentan befahrenen Verkehrsweges, eine momentan befahrene Fahrspur eines Verkehrsweges, eine Breite eines momentan befahrenen Verkehrsweges und/oder eine Verkehrsbeschränkung berücksichtigt werden.

3. Verfahren nach Anspruch 1 oder 2, **gekennzeichnet durch** folgenden zusätzlichen Schritt,
(d) Erzeugen eines über einen momentanen Betriebszustand des Fahrer-Assistenzsystems informierenden, vorbestimmten Signals.

4. Verfahren nach Anspruch 3, **dadurch gekennzeichnet, dass** das vorbestimmte Signal ein akustisches Signal, ein optisches Signal und/oder ein von einem Fahrer spürbares Kraftrückmeidungssignal ist.

5. Verfahren nach einem der vorhergehenden Ansprüche, **dadurch gekennzeichnet, dass** das Fahrer-Assistenzsystem ein autonomes, intelligentes Fahrzeugführungssystem (AICC), eine Vorrichtung zur spurhaltungsgeregelten Lenkung eines Kraftfahrzeuges, ein Sicherheits-Management-System zum Schutz von Fahrzeuginsassen, eine Einrichtung zum Regeln einer Geschwindigkeit eines Kraftfahrzeuges und/oder eines Abstandes des Kraftfahrzeuges zu einem vorausfahrenden Fahrzeug oder zu einem in Fahrtrichtung befindlichen Gegenstand, eine Vorrichtung zum Vermeiden und/oder Minimieren von Konfliktsituationen im Straßenverkehr und/oder eine Vorrichtung zur Leuchtweiteneinstellung von Scheinwerfern eines Kraftfahrzeuges ist.

6. Fahrer-Assistenzsystem eines Kraftfahrzeuges, umfassend ein Erfassungsmittel für vorbestimmte, momentane Umgebungsparameter einer augenblicklichen Verkehrssituation, ein Vergleichsmittel zum Vergleichen der erfassten vorbestimmten momentanen Umgebungsparameter mit gespeicherten, für das Fahrer-Assistenzsystem zulässigen vorbestimmten Umgebungsparametern sowie ein Aktivierungs-/Deaktivierungsmittel zum automatischen Deaktivieren des Fahrer-Assistenzsystems, wenn sich die vorbestimmten momentanen Umgebungsparameter außerhalb der für das Fahrer-Assistenzsystem zulässigen vorbestimmten Umgebungsparameter befinden oder zum automatischen Aktivieren des Fahrer-Assistenzsystems, wenn sich die vorbestimmten momentanen Umgebungsparameter innerhalb der für das Fahrer Assistenzsystem zulässigen vorbestimmten Umgebungsparameter befinden, vorgesehen ist,
**dadurch gekennzeichnet, dass**
die vorbestimmten momentanen Umgebungsparameter eine Verkehrswegeart sind, nämlich Autobahn, Landstraße oder Stadtstraße, wobei mittels eines GPS-Systems (26) die momentane Position des Kraftfahrzeuges festgestellt wird und ein Prozessor (28) anhand dieser Positionsdaten aus den Daten in einem Landkartenspeicher (30) ermittelt, auf welcher Verkehrswegeart sich das Fahrzeug momentan befindet.

7. Vorrichtung nach Anspruch 6, **dadurch gekennzeichnet, dass** als zusätzliche äußere Umgebungsparameter eine Verkehrsart, ein Kurvenradius eines momentan befahrenen Verkehrsweges, eine momentan befahrene Fahrspur eines Verkehrsweges, eine Breite eines momentan befahrenen Verkehrsweges und/oder eine Verkehrsbeschränkung berücksichtigt werden.

8. Fahrer-Assistenzsystem nach Anspruch 6 oder 7, **dadurch gekennzeichnet, dass** ein Anzeigemittel (31, 32) vorgesehen ist, welches ein über einen momentanen Betriebszustand des Fahrer-Assistenzsystems informierendes, vorbestimmtes Signal erzeugt.

9. Fahrer-Assistenzsystem nach Anspruch 8, **dadurch gekennzeichnet, dass** das vorbestimmte Signal ein akustisches Signal, ein optisches Signal und/oder ein von einem Fahrer spürbares Kraftrückmeidungssignal ist.

10. Fahrer-Assistenzsystem nach einem der Ansprüche 6 bis 9, **dadurch gekennzeichnet, dass** dieses ein autonomes, intelligentes Fahrzeugführungssystem (AICC), eine Vorrichtung zur spurhaltungsgeregelten Lenkung eines Kraftfahrzeuges, ein Sicherheits-Management-System zum Schutz von Fahrzeuginsassen, eine Einrichtung zum Regeln einer Geschwindigkeit eines Kraftfahrzeuges und/oder eines Abstandes des Kraftfahrzeuges zu einem vorausfahrenden Fahrzeug oder zu einem in Fahrtrichtung befindlichen Gegenstand, eine Vorrichtung zum Vermeiden und/oder Minimieren von Konfliktsituationen im Straßenverkehr und/oder eine Vorrichtung zur Leuchtweiteneinstellung von Scheinwerfern eines Kraftfahrzeuges umfasst.

11. Fahrer-Assistenzsystems nach einem der Ansprüche 6 bis 10, **dadurch gekennzeichnet, dass** das Erfassungsmittel für vorbestimmte, momentane Umgebungsparameter einer augenblicklichen Verkehrssituation zusätzlich ein Verkehrsleitsystem, ein Radar, eine manuell vom Fahrer bedienbare Eingabevorrichtung und/oder ein Radsensor-System ist.

## Claims

1. Method for operating a driver assistance system of a motor vehicle, comprising the following steps,
(a) sensing of predetermined instantaneous ambient parameters of an instantaneous traffic situation,
(b) comparison of the sensed predetermined instantaneous ambient parameters with stored ambient parameters which are permissible for the driver assistance system and
(c) automatic deactivation of the driver assistance system if the predetermined instantaneous ambient parameters are located outside the predetermined ambient parameters which are permissible for the driver assistance system, or automatic activation of the driver assistance system if the predetermined instantaneous ambient parameters are located within the predetermined ambient parameters which are permissible for the driver assistance system, **characterized in that** the predetermined instantaneous ambient parameters are a type of road, specifically a motorway, trunk road or city street, with the instantaneous position of the motor vehicle being detected by means of a GPS system (26), and a processor (28) determining which type of road the vehicle is located on at a particular time by reference to this position data from the data in a map memory (30).

2. Method according to Claim 1, **characterized in that** a type of traffic, a radius of the bend of a road on which a vehicle is currently travelling, a lane of a road on which a vehicle is currently travelling, a width of a road on which a vehicle is currently travelling and/or a traffic restriction are taken into account as additional external ambient parameters.

3. Method according to Claim 1 or 2, **characterized by** the following additional step:
(d) generation of a predetermined signal which provides information about an instantaneous operating state of the driver assistance system.

4. Method according to Claim 3, **characterized in that** the predetermined signal is an audible signal, a visual signal and/or a force feedback signal which can be felt by a driver.

5. Method according to one of the preceding claims, **characterized in that** the driver assistance system is an autonomous, intelligent vehicle guiding system (AICC), a device for steering a motor vehicle with lane-holding control, a safety management system for protecting vehicle occupants, a device for performing closed-loop control of a speed of a motor vehicle and/or a distance of the motor vehicle from a vehicle travelling in front or from an object located in the direction of travel, a device for avoiding and/or minimizing conflict situations in road traffic and/or a device for setting the beam width of headlights of a motor vehicle.

6. Driver assistance system for a motor vehicle, comprising a sensing means for predetermined instantaneous ambient parameters of an instantaneous traffic situation, a comparison means for comparing the sensed predetermined instantaneous ambient parameters with stored predetermined ambient parameters which are permissible for the driver assistance system, and an activation/deactivation means for automatically deactivating the driver assistance system if the predetermined instantaneous ambient parameters are located outside the predetermined ambient parameters which are permissible for the driver assistance system, or for automatically activating the driver assistance system if the predetermined instantaneous ambient parameters are located within the predetermined ambient parameters which are permissible for the driver assistance system, **characterized in that** the predetermined instantaneous ambient parameters are a type of road, specifically a motorway, trunk road or city street, with the instantaneous position of the motor vehicle being detected by means of a GPS system (26), and a processor (28) determining which type of road the vehicle is located on at a particular time by reference to this position data from the data in a map memory (30).

7. Driver assistance system according to Claim 6, **characterized in that** a type of traffic, a radius of the bend of a road on which a vehicle is currently travelling, a lane of a road on which a vehicle is currently travelling, a width of a road on which a vehicle is currently travelling and/or a traffic restriction are taken into account as additional external ambient parameters.

8. Driver assistance system according to Claim 6 or 7, **characterized in that** a display means (31, 32) is provided, which display means generates a predetermined signal which provides information about an instantaneous operating state of the driver assistance system.

9. Driver assistance system according to Claim 8, **characterized in that** the predetermined signal is an audible signal, a visual signal and/or a force feedback signal which can be felt by a driver.

10. Driver assistance system according to one of Claims 6 to 9, **characterized in that** said driver assistance system is an autonomous, intelligent vehicle guiding system (AICC), a device for steering a motor vehicle with lane-holding control, a safety management system for protecting vehicle occupants, a device for performing closed-loop control of a speed of a motor vehicle and/or a distance of the motor vehicle from a vehicle travelling in front or from an object located in the direction of travel, a device for avoiding and/or minimizing conflict situations in road traffic and/or a device for setting the beam width of headlights of a motor vehicle.

11. Driver assistance system according to one of Claims 6 to 10, **characterized in that** the sensing means for predetermined instantaneous ambient parameters of an instantaneous traffic situation is additionally a traffic control system, a radar system, an input device which can be operated manually by the driver and/or a radar sensor system.

## Revendications

1. Procédé de fonctionnement d'un système d'assistance au conducteur d'un véhicule automobile comprenant les étapes suivantes :
a) Acquisition de paramètres d'environnement momentanés prédéfinis d'une situation de trafic actuelle,
b) comparaison des paramètres d'environnement momentanés prédéfinis acquis avec des paramètres d'environnement enregistrés, autorisés pour le système d'assistance au conducteur et
c) désactivation automatique du système d'assistance au conducteur si les paramètres d'environnement momentanés prédéfinis se trouvent en-dehors des paramètres d'environnement autorisés prédéfinis pour le système d'assistance au conducteur ou activation automatique du système d'assistance au conducteur si les paramètres d'environnement momentanés prédéfinis sont inclus dans les paramètres d'environnement autorisés prédéfinis pour le système d'assistance au conducteur, **caractérisé en ce que**
les paramètres d'environnement momentanés prédéfinis sont un type de voie de circulation, à savoir une autoroute, une route nationale ou une voie urbaine, la position momentanée du véhicule automobile étant définie au moyen d'un système GPS (26) et un processeur (28) déterminant au moyen de ces données de position et à partir des données dans une mémoire de carte géographique (30) le type de voie de circulation sur lequel se trouve momentanément le véhicule.

2. Procédé selon la revendication 1, **caractérisé en ce que** les paramètres d'environnement externes supplémentaires qui sont pris en compte sont un type de circulation, un rayon de courbure d'une voie de circulation momentanément empruntée, une bande de circulation momentanément empruntée d'une voie de circulation, une largeur d'une voie de circulation momentanément empruntée et/ou une restriction de trafic.

3. Procédé selon la revendication 1 ou 2, **caractérisé par** l'étape supplémentaire suivante :
d) Génération d'un signal prédéfini qui informe sur une situation de fonctionnement momentanée du système d'assistance au conducteur.

4. Procédé selon la revendication 3, **caractérisé en ce que** le signal prédéfini est un signal sonore, un signal visuel et/ou un signal de retour de force perceptible par le conducteur.

5. Procédé selon l'une des revendications précédentes, **caractérisé en ce que** le système d'assistance au conducteur est un système de conduite de véhicule autonome intelligent (AICC), un dispositif de direction avec régulation de la stabilité de trajectoire d'un véhicule automobile, un système de gestion de la sécurité destiné à protéger les occupants du véhicule, un dispositif de régulation de la vitesse d'un véhicule automobile et/ou d'un espacement du véhicule automobile par rapport à un véhicule qui le précède ou par rapport à un objet qui se trouve dans le sens du déplacement, un dispositif destiné à éviter et/ou à diminuer les situations de conflit dans le trafic routier et/ou un dispositif de réglage de la largeur d'éclairage des phares d'un véhicule automobile.

6. Système d'assistance au conducteur d'un véhicule automobile comprenant un moyen d'acquisition pour des paramètres d'environnement momentanés prédéfinis d'une situation de trafic actuelle, un moyen de comparaison pour comparer les paramètres d'environnement momentanés prédéfinis acquis avec des paramètres d'environnement enregistrés, autorisés pour le système d'assistance au conducteur ainsi qu'un moyen d'activation / de désactivation pour désactiver automatiquement le système d'assistance au conducteur si les paramètres d'environnement momentanés prédéfinis se trouvent en-dehors des paramètres d'environnement autorisés prédéfinis pour le système d'assistance au conducteur ou pour activer automatiquement le système d'assistance au conducteur si les paramètres d'environnement momentanés prédéfinis sont inclus dans les paramètres d'environnement autorisés prédéfinis pour le système d'assistance au conducteur, **caractérisé en ce que**
les paramètres d'environnement momentanés prédéfinis sont un type de voie de circulation, à savoir une autoroute, une route nationale ou une voie urbaine, la position momentanée du véhicule automobile étant définie au moyen d'un système GPS (26) et un processeur déterminant au moyen de ces données de position et à partir des données dans une mémoire de carte géographique (30) le type de voie de circulation sur lequel se trouve momentanément le véhicule.

7. Système d'assistance au conducteur selon la revendication 6, **caractérisé en ce que** les paramètres d'environnement externes supplémentaires qui sont pris en compte sont un type de circulation, un rayon de courbure d'une voie de circulation momentanément empruntée, une bande de circulation momentanément empruntée d'une voie de circulation, une largeur d'une voie de circulation momentanément empruntée et/ou une restriction de trafic.

8. Système d'assistance au conducteur selon la revendication 6 ou 7, **caractérisé en ce qu'**il est prévu un moyen d'affichage (31, 32) qui génère un signal prédéfini qui informe sur une situation de fonctionnement momentanée du système d'assistance au conducteur.

9. Système d'assistance au conducteur selon la revendication 8, **caractérisé en ce que** le signal prédéfini est un signal sonore, un signal visuel et/ou un signal de retour de force perceptible par le conducteur.

10. Système d'assistance au conducteur selon l'une des revendications 6 à 9, **caractérisé en ce que** celui-ci est un système de conduite de véhicule autonome intelligent (AICC), un dispositif de direction avec régulation de la stabilité de trajectoire d'un véhicule automobile, un système de gestion de la sécurité destiné à protéger les occupants du véhicule, un dispositif de régulation de la vitesse un véhicule automobile et/ou d'un espacement du véhicule automobile par rapport à un véhicule qui le précède ou par rapport à un objet qui se trouve dans le sens du déplacement, un dispositif destiné à éviter et/ou à diminuer les situations de conflit dans le trafic routier et/ou un dispositif de réglage de la largeur d'éclairage des phares d'un véhicule automobile.

11. Système d'assistance au conducteur selon l'une des revendications 6 à 10, **caractérisé en ce que** le moyen d'acquisition des paramètres d'environnement momentanés prédéfinis d'une situation de trafic actuelle est en plus un système de contrôle de trafic, un radar, un dispositif de saisie pouvant être utilisé manuellement par le conducteur et/ou un système de détecteur radar.
